# EUROPEAN PATENT SPECIFICATION

(11) **EP 4 505 548 B1**
(45) Date of publication and mention of the grant of the patent: **08.10.2025**
(21) Application number: 23729166.1
(22) Date of filing: 09.05.2023
(51) Int. Cl.: H01M 50/00, H01M 50/20, H01M 50/204, A62C 3/00, A62C 3/16, H01M 10/48, H01M 10/613

(54) **SAFETY CABINET FOR THE STORAGE OF ELECTRIC BATTERIES**
SICHERHEITSSCHRANK ZUR AUFBEWAHRUNG VON ELEKTRISCHEN BATTERIEN
ARMOIRE DE SÉCURITÉ POUR LE STOCKAGE DE BATTERIES ÉLECTRIQUES

(30) Priority: 09.05.2022 IT 202200009503
(43) Date of publication of application: 12.02.2025
(73) Proprietor: Chemisafe Srl, 31032 Casale sul Sile (TV) (IT)
(72) Inventor: STANCANELLI, Bruno, 31100 Treviso (TV) (IT)
(74) Representative: Maroscia, Antonio
(86) International application number: PCT/IB2023/054780
(87) International publication number: WO 2023/218338

(56) References cited:
- WO-A1-2021/136875
- CN-A- 110 466 380
- CN-U- 216 120 542

## Description

### Field of the invention

The present invention generally relates to the technical field of prevention or reduction of fires and it particularly relates to a safety cabinet for storing electric batteries.

### Background Art

The use of safety cabinets for storing highly flammable, chemical or radioactive products has been long known in the fire prevention or reduction industry.

Generally, these safety cabinets are made following the recommendations laid down by the European regulations of the industry and relative to the safety cabinets positioned freely or on the wall in a room and designed to store flammable substances.

Typically, the safety cabinets are subjected to destructive tests in a special furnace adapted to carry out fire resistance tests and whose results must guarantee that the increase of temperature in the cabinet does not exceed 200°C over a period comprised between 15-90 minutes depending on the flammability classification of the cabinet.

Such times are established depending on the end function of the safety cabinet and simultaneously required so that the staff leaves the room in which the cabinet is installed and so that the fire fighters can enter the room before the stored flammable products can cause a fire.

A particular function of these safety cabinets is to store chemical products or electric batteries, preferably, but not exclusively lithium-ion batteries.

Typically, the safety cabinets for storing electric batteries comprise a closable compartment provided with at least one shelf for supporting one or more batteries in which the compartment comprises one or more fire detection sensors connected to at least one extinguishing system of the sprinkler or aerosol type.

Therefore, when the sensor detects a temperature increase in the compartment, the extinguishing system is activated to extinguish any flames or overheating of the batteries.

A drawback of such known solution lies in the fact that the known firefighting systems used by such type of safety cabinets temporarily extinguish the fire and they do not prevent the fire from starting again or the overheating that could occur subsequently to the same.

To at least partially overcome such drawbacks, storage cabinets have been developed in which the shelves can be inclined or tilted to allow the content of the shelves to drop - by gravity - into a tank filled with a fireproof liquid, as described in WO2021136875 or CN110466380.

However, such systems need the presence of a centralised electronic control unit directly interacting with the shelves and the system is not activated in case of malfunction of the control unit.

In conclusion, the known safety cabinets for storing electric batteries do not guarantee a safe and full activation of systems for quarantining the batteries subsequently to the triggering of a fire or overheating.

### Technical problem

In the light of the prior art, the technical problem addressed by the present invention can be considered how to improve the functions of a safety cabinet, particularly for storing electric batteries and facilitating the extinguishing of the same in case of fire and the quarantining thereof.

### Summary of the invention

The object of the present invention is to solve the aforementioned problem by providing a safety cabinet for storing electric batteries which is highly effective and cost-effective.

A particular object of the present invention is to provide a safety cabinet of the type indicated above which allows to guarantee the extinguishing of the batteries in case fire and the quarantining thereof.

Another object of the present invention is to provide a safety cabinet of the type indicated above wherein the batteries can be stored in a fully safe manner.

A further object of the present invention is to provide a safety cabinet of the type indicated above which can be made using components that are simple and easily available.

Another object of the present invention is to provide a safety cabinet of the type indicated above which has particularly small overall dimensions.

A further object of the present invention is to provide a safety cabinet of the type indicated above which allows to provide safe conditions for the batteries even after neutralising the hazard that occurred.

The objects mentioned above and others which will be more apparent hereinafter are achieved by a safety cabinet for storing electric batteries according to claim 1, wherein the cabinet comprises a closable compartment provided with at least one hinged shelf with respect to the compartment for supporting one or more batteries.

The cabinet comprises a tank for collecting a fireproof or extinguishing liquid arranged below the at least one shelf, locking means which can be deactivated to hold the at least one shelf in raised position and release means interacting with the locking means.

The release means comprise a heat sensitive member which can be automatically activated upon reaching a predetermined threshold temperature and the locking means comprise an upright interacting with the at least one shelf and configured to slide vertically towards the tank upon the activation of the heat sensitive member.

Furthermore, the release means comprise a mechanical switch interposed between the heat sensitive member and the upright and configured to pass from a support position in which it holds the upright to a release position in which it allows the sliding of the upright so as to allow the tilting of the shelf and let the batteries drop into the tank by gravity.

Thanks to this combination of characteristics, upon reaching the predetermined threshold temperature due to a fire or the overheating of the batteries, the release means allow to deactivate the locking means allowing the batteries to drop immediately and by gravity into the tank containing the fireproof and self-extinguishing liquid, eliminating the hazard of triggering the batteries.

Advantageous embodiments of the invention are attained according to the dependent claims.

### Brief description of the drawings

Further characteristics and advantages of the invention will be more apparent in the light of the detailed description of a preferred but not exclusive embodiment of a safety cabinet like the one mentioned above, shown by way of non-limiting example with reference to the drawings below, wherein:
**FIG. 1** shows a lateral schematic view, a front schematic view and an enlargement of a detail of the safety cabinet according to the invention in a first operative configuration;
**FIGS. 2** and **3** show the same type of views of the safety cabinet of Fig. 1, respectively in a second and third operative configuration.

### Detailed description of a preferred embodiment

With particular reference to the figures, there is shown a safety cabinet for storing electric batteries **B,** indicated in its entirety with reference numeral **1.**

Hereinafter, the expression "electric batteries" generally indicated with reference numeral **B** will be used to indicate any device adapted to convert chemical energy into electrical power with a redox reaction, whether it is reversible or non-reversible device, that is any electrical cell, chemical cell, electrochemical cell or primary battery, such as for example lead, nickel-metal hydride or lithium-ion accumulators.

In its most general embodiment, the safety cabinet **1** comprises a closable compartment **2** provided with at least one shelf **3** for supporting one or more batteries **B.**

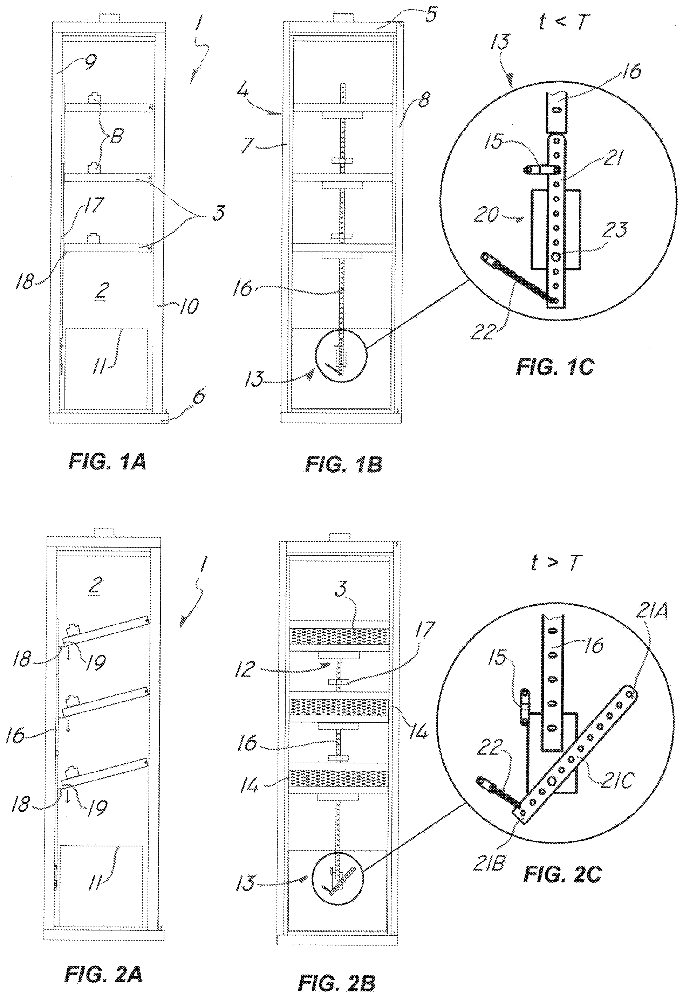

As better visible in **FIGS. 1-3****,** the closable compartment **2** is delimited by a box-like frame **4** comprising an upper wall **5** and a bottom wall **6** which are substantially horizontal, a pair of substantially vertical side walls **7, 8,** a substantially vertical rear wall **9** and at least one door leaf **10** opposite to the rear wall **9.**

In the example shown in the figures, the closable compartment **2** comprises three substantially horizontal shelves **3,** spaced apart and parallel to each other. However, it cannot be ruled out that the cabinet **1** according to the invention, may comprise a higher or lower number of shelves **3** or comprise shelves **3** slightly inclined with respect to the upper **5** and bottom **6** walls of the cabinet **1.**

Advantageously, the shelf **3** is hinged with respect to the compartment **2** and the cabinet **1** comprises a tank **11** for collecting a fireproof or extinguishing liquid **L** arranged below the at least one shelf **3.**

Advantageously, there are provided locking means **12** which can be deactivated to hold the shelf **3** in a substantially horizontal raised position and release means **13** interacting with the locking means **12** and which can be automatically activated upon reaching a predetermined threshold temperature **T** to allow the tilting of the shelf **3** and let the batteries **B** drop into the tank **11** by gravity.

Therefore, the shelf **3** is of the tiltable bracket type and it has at least one pair of first opposite lateral edges **14** hinged to at least one pair of opposite vertical walls **7, 8; 9, 10** of the compartment **2.**

In this manner, should the batteries **B** overheat or catch fire, the release means **13** are activated when the temperature **t** in the compartment **2** reaches a threshold temperature **T** tilting the shelf **3** due to its weight and/or the weight of the supported batteries **B,** with ensuing dropping of the latter into the collecting tank **11.**

Preferably, the liquid **L** contained in the collecting tank **11** is water.

Furthermore, the predetermined threshold temperature **T** is comprised between 45°C and 55°C, preferably equal to 50°C.

In the embodiment shown in **FIGS. 1-3****,** the release means **12** comprise a heat sensitive member **15,** preferably consisting of a mechanical fuse.

The locking means **12** comprise an upright **16** interacting with the shelf **3** and configured to slide vertically towards the tank **11** upon the activation of the heat sensitive member **15.**

Preferably, the upright **16** comprises an elongated metal element, that has a height-wise dimension much larger than its width and its thickness.

Furthermore, the upright **16** may be positioned along the rear wall **9** of the frame **4** and it may be vertically slidable along at least one guide **17** also positioned in the rear wall **9** and substantially U-shaped in plan view.

Fixed to the upright **16** there is at least one support bracket **18** to interact with the shelf **3** and the support bracket **18** is adapted to interact with at least one second lateral edge **19** of the shelf **3.**

Therefore, upon the activation of the heat sensitive member **15** there follows the deactivation of the locking means **12** with ensuing the sliding towards the tank **11** of the support bracket **18** of the shelf **3** allowing the latter to tilt by gravity.

In an embodiment, the cabinet **1** comprises a plurality of shelves **3** and in case of activation of the heat sensitive member **15,** the arrangement of the release means **13** is such that all the shelves **3** are tilted simultaneously, with ensuing dropping of the batteries **B** into the tank **11.**

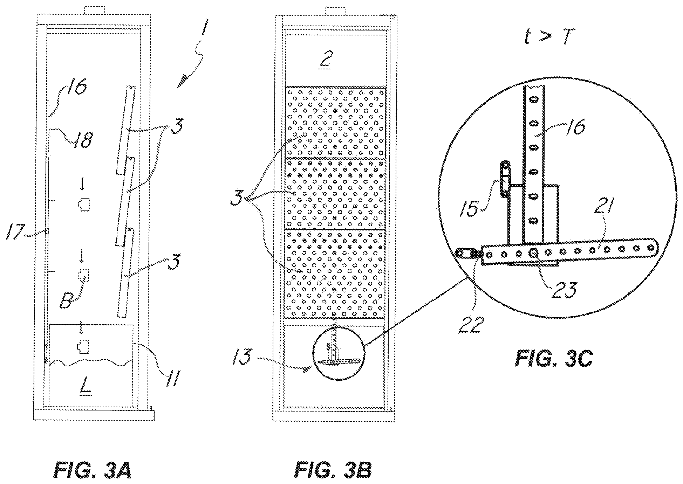

As better shown in **FIGS. 1C** and **3C** the release means **13** comprise a mechanical switch **20** interposed between the heat sensitive member **15** and the upright **16** and it is configured to pass from a support position in which it holds the upright **16** to a release position in which it allows the sliding of the upright **16** towards the tank **11.**

In particular, the mechanical switch **20** comprises a lever **21** having a first end portion **21A** connected to the heat sensitive member **15** and facing towards the upright **16** and a second end portion **21B** connected to elastic means **22** and facing towards the tank **11.**

Advantageously, the lever **21** is pivoted in a central portion **21C** thereof on a substantially horizontal pin **23.**

Therefore, the elastic means **22** are configured to allow the rotation of the lever **21** around the pin **23** when the heat sensitive member **15** is activated.

In other words, the elastic means **22** are configured to allow the lever **21** to pass from a support vertical position in which it holds the upright **16** to an inclined or substantially horizontal release position in which it allows the sliding of the upright **16** towards the tank **11.**

Preferably, the heat sensitive member **15,** the elastic means **22** and the pin **23** are associated to the rear wall **9** of the box-like frame **4.**

Suitably, when the lever **21** is in the substantially horizontal release position, the upright **16** interacts with the lever **21** at the pin **23** reaching the fully lowered position, as better shown in **FIG. 3C****.**

Described below is the operative functioning of the safety cabinet **1** before and after a hazardous event due to a fire or overheating of the batteries **B.**

With reference to **FIG. 1** which shows the cabinet **1** in a first operative configuration in which the temperature **t** in the compartment **2** is lower than the threshold temperature **T,** the release means **13** are deactivated. Therefore, the lever **21** is held in vertical position by the heat sensitive member **15,** i.e. the mechanical switch **20** is in the positioning for supporting the upright **16.**

Furthermore, the locking means **12** are activated, therefore the second lateral edge **19** of the shelf **3** interacts with the support bracket **18** so as to allow to support a battery **B.**

**FIG. 2** shows the cabinet **1** in a second operative configuration in which the temperature **t** in the compartment **2** is higher than the threshold temperature **T** following a case of fire or overheating of the battery **B.**

In this configuration, the release means **13** are activated, therefore the heat sensitive member **15** releases the lever **21** which rotates around the pin **23** to reach an inclined position, i.e. the mechanical switch **20** is in release position allowing the sliding of the upright **16** along the guides **17** towards the tank **11.**

Furthermore, the locking means **12** are deactivated, therefore the second lateral edge **19** of the shelf **3** slips off from the support bracket **18.**

In a third operative configuration of the cabinet **1,** shown in **FIG. 3****,** the upright **16** is fully lowered and in contact with the lever **21** at the pin **23,** the shelf **3** is tilted and the batteries **B** drop into the tank **11** by gravity.

In this configuration, the liquid **L** keeps the batteries **B** in quarantine until the fire fighters or the designated staff comes to eliminate the event that triggered the fire or the overheating of the batteries **B.**

In the light of the above it is clear that the safety cabinet according to the invention achieves the pre-established objects and in particular it facilitates the turning off of the batteries in case of fire and the quarantining thereof.

The safety cabinet according to the invention is susceptible to numerous modifications and variants all falling within the inventive concept outlined in the attached claims.

Although the safety cabinet has been described with particular reference to the attached figures, the reference numerals used in the description and in the claims are meant for improving the intelligibility of the invention and they do not limit the claimed scope of protection in any manner whatsoever.

Throughout the description, reference to "an embodiment" or "the embodiment" or "some embodiments" indicate that a particular characteristic, structure or element described is comprised in at least one embodiment of the object of the present invention.

Furthermore, the particular characteristics, structures or elements may be combined in any appropriate fashion in one or more embodiments.

### Industrial applicability

The present invention can be applied at industrial level because it can be manufactured on industrial scale by industries belonging to the fire prevention or reduction industry.

## Claims

1. A safety cabinet **(1)** for storing electric batteries **(B),** wherein the cabinet **(1)** comprises:
- a closable compartment **(2)** provided with at least one shelf **(3)** hinged with respect to said compartment **(2)** for supporting one or more batteries **(B);**
- a tank **(11)** for collecting a fireproof or extinguishing liquid **(L)** arranged below said at least one shelf **(3);**
- locking means **(12)** which can be deactivated to hold said at least one shelf **(3)** in raised position and release means **(13)** interacting with said locking means **(12);**
wherein said release means **(13)** comprise a heat sensitive member **(15)** which can be activated automatically upon reaching a predetermined threshold temperature **(T);**
**characterised in that** said locking means **(12)** comprise an upright **(16)** interacting with said at least one shelf **(3)** and configured to slide vertically towards said tank **(11)** upon the activation of said heat sensitive member **(15),** said release means **(13)** comprising a mechanical switch **(20)** interposed between said heat sensitive member **(15)** and said upright **(16)** and configured to pass from a support position in which it holds said upright **(16)** to a release position in which it allows the sliding of said upright **(16)** to allow the tilting of said shelf **(3)** and let said batteries **(B)** drop into said tank **(11)** by gravity.

2. Cabinet as claimed in claim 1, **characterised in that** said mechanical switch **(20)** comprises a lever **(21)** having a first end portion **(21A)** connected to said heat sensitive member **(15)** and facing towards said upright **(16)** and a second end portion **(21B)** connected to elastic means **(22)** and facing towards said tank **(11),** said lever **(21)** being pivoted on a substantially horizontal pin **(23)** in a central portion **(21C)** thereof.

3. Cabinet as claimed in claim 2, **characterised in that** said elastic means **(22)** are configured to allow the rotation of said lever **(21)** around said pin **(23)** upon the activation of said heat sensitive member **(15).**

4. Cabinet as claimed in claim 1, **characterised in that** said shelf **(3)** has at least one pair of first opposite lateral edges **(14)** hinged to at least one pair of opposite vertical walls **(7, 8; 9, 10)** of said compartment **(2).**

5. Cabinet as claimed in claim 1, **characterised in that** at least one support bracket is secured **(18)** to said upright **(16)** to interact with said at least one shelf **(3),** said support bracket **(18)** being interacting with at least one second lateral edge **(19)** of said shelf **(3).**

6. Cabinet as claimed in claim 1, **characterised in that** said closable compartment **(2)** is delimited by a box-like frame **(4)** comprising a substantially horizontal upper wall **(5)** and bottom wall **(6),** a pair of substantially vertical side walls **(7, 8),** a rear wall **(9)** and at least one substantially vertical door leaf **(10).**

7. Cabinet as claimed in one or more of the preceding claims, **characterised in that** said heat sensitive member **(15),** said elastic means **(22)** and said pin **(23)** are associated with said rear wall **(9),** said shelf **(3)** being hinged to said side walls **(7, 8).**

8. Cabinet as claimed in claim 1, **characterised in that** said heat sensitive member **(15)** is a mechanical fuse.

9. Cabinet as claimed in claim 1, **characterised in that** said fireproof or extinguishing liquid **(L)** is water.

10. Cabinet as claimed in claim 1, **characterised in that** said predetermined threshold temperature **(T)** is comprised between 45°C and 55°C, preferably equal to 50°C.

11. Cabinet as claimed in claim 1, **characterized in that** it comprises a plurality of shelves **(3),** the arrangement of said release means **(13)** being such that said shelves **(3)** are tilted simultaneously.

## Patentansprüche

1. Sicherheitsschrank (1) zur Aufbewahrung von elektrischen Batterien (B), wobei der Schrank (1) umfasst:
- ein verschließbares Fach (2), das mit mindestens einem Regalboden (3) versehen ist, der in Bezug auf das Fach (2) schwenkbar ist, um eine oder mehrere Batterien (B) aufzunehmen;
- einen Tank (11) zum Sammeln einer feuerfesten oder löschenden-Flüssigkeit (L), der unterhalb des mindestens einen Regalbodens (3) angeordnet ist;
- eine Verriegelungsvorrichtung (12), die deaktiviert werden kann, um den mindestens einen Regalboden (3) in angehobener Position zu halten, und eine Entriegelungsvorrichtung (13), die mit der Verriegelungsvorrichtung (12) zusammenwirkt;
wobei die Entriegelungsvorrichtung (13) ein wärmeempfindliches Element (15) umfasst, das bei Erreichen einer vorbestimmten Schwellentemperatur (T) automatisch aktiviert werden kann;
**dadurch gekennzeichnet, dass** die Verriegelungsvorrichtung (12) eine Stütze (16) umfasst, die mit dem mindestens einen Regalboden (3) zusammenwirkt und so konfiguriert ist, dass sie bei Aktivierung des wärmeempfindlichen Elements (15) vertikal in Richtung des Tanks (11) gleitet, wobei die Entriegelungsvorrichtung (13) einen mechanischen Schalter (20) umfasst, der zwischen dem wärmeempfindlichen Element (15) und dem Ständer (16) angeordnet ist und so konfiguriert ist, dass er von einer Stützposition, in der er den Ständer (16) hält, in eine Freigabeposition, in der er das Gleiten des Ständers (16) ermöglicht, übergeht, um das Kippen des Regalbodens (3) zu ermöglichen und die Batterien (B) durch die Schwerkraft in den Tank (11) fallen zu lassen.

2. Schrank gemäß Anspruch 1, **dadurch gekennzeichnet, dass** der mechanische Schalter (20) einen Hebel (21) umfasst, der einen ersten Endabschnitt (21A) aufweist, der mit dem wärmeempfindlichen Element (15) verbunden ist und zum Ständer (16) hin ausgerichtet ist, sowie einen zweiten Endabschnitt (21B), der mit einer elastischen Einrichtung (22) verbunden ist und zum Tank hin ausgerichtet ist (11) zeigt, wobei der Hebel (21) an einem im Wesentlichen horizontalen Stift (23) in einem mittleren Abschnitt (21C) desselben schwenkbar gelagert ist.

3. Schrank nach Anspruch 2, **dadurch gekennzeichnet, dass** die elastischen Mittel (22) so konfiguriert sind, dass sie die Drehung des Hebels (21) um den Stift (23) bei Aktivierung des wärmeempfindlichen Elements (15) ermöglichen.

4. Schrank nach Anspruch 1, **dadurch gekennzeichnet, dass** der Regalboden (3) mindestens ein Paar gegenüberliegender seitlicher Kanten (14) aufweist, die an mindestens einem Paar gegenüberliegender vertikaler Wände (7, 8; 9, 10) des Fachs (2) angelenkt sind.

5. Schrank nach Anspruch 1, **dadurch gekennzeichnet, dass** mindestens eine Halterung (18) an dem Ständer (16) befestigt ist, um mit dem mindestens einen Regalboden (3) zusammenzuwirken, wobei die Halterung (18) mit mindestens einer zweiten Seitenkante (19) des Regalbodens (3) zusammenwirkt.

6. Schrank nach Anspruch 1, **dadurch gekennzeichnet, dass** das verschließbare Fach (2) durch einen kastenartigen Rahmen (4) begrenzt ist, der eine im Wesentlichen horizontale Oberwand (5) und Bodenwand (6), ein Paar im Wesentlichen vertikaler Seitenwände (7, 8), eine Rückwand (9) und mindestens ein im Wesentlichen vertikales Türblatt (10) umfasst.

7. Schrank nach einem oder mehreren der vorstehenden Ansprüche, **dadurch gekennzeichnet, dass** das wärmeempfindliche Element (15), das elastische Mittel (22) und der Stift (23) mit der Rückwand (9) verbunden sind, wobei das Regal (3) an den Seitenwänden (7, 8) angelenkt ist.

8. Schrank nach Anspruch 1, **dadurch gekennzeichnet, dass** das wärmeempfindliche Element (15) eine mechanische Sicherung ist.

9. Schrank nach Anspruch 1, **dadurch gekennzeichnet, dass** die feuerfeste oder löschende Flüssigkeit (L) Wasser ist.

10. Schrank nach Anspruch 1, **dadurch gekennzeichnet, dass** die vorbestimmte Schwellentemperatur (T) zwischen 45°C und 55°C liegt, vorzugsweise 50°C beträgt.

11. Schrank nach Anspruch 1, **dadurch gekennzeichnet, dass** er mehrere Regalböden (3) umfasst, wobei die Anordnung der Entriegelungsvorrichtung (13) so ist, dass die Regalböden (3) gleichzeitig gekippt werden.

## Revendications

1. Armoire de sécurité (1) destinée au stockage de batteries électriques (B), dans laquelle l'armoire (1) comprend :
- un compartiment refermable (2) muni d'au moins une étagère (3) articulée par rapport audit compartiment (2) pour supporter une ou plusieurs batteries (B);
- un réservoir (11) destiné à recueillir un liquide ignifuge ou extincteur (L) disposé sous ladite au moins une étagère (3);
- des moyens de verrouillage (12) qui peuvent être désactivés pour maintenir ladite au moins une étagère (3) en position relevée et des moyens de déverrouillage (13) interagissant avec lesdits moyens de verrouillage (12);
dans lequel lesdits moyens de déverrouillage (13) comprennent un élément thermosensible (15) qui peut être activé automatiquement lorsqu'une température seuil prédéterminée (T) est atteinte;
**caractérisé en ce que** lesdits moyens de verrouillage (12) comprennent un montant (16) interagissant avec ladite au moins une étagère (3) et configuré pour coulisser verticalement vers ledit réservoir (11) lors de l'activation dudit élément thermosensible (15), lesdits moyens de déverrouillage (13) comprenant un interrupteur mécanique (20) interposé entre ledit élément thermosensible (15) et ledit montant (16) et configuré pour passer d'une position de support dans laquelle il maintient ledit montant (16) à une position de libération dans laquelle il permet le glissement dudit montant (16) afin de permettre l'inclinaison de ladite étagère (3) et de laisser lesdites piles (B) tomber dans ledit réservoir (11) par gravité.

2. Armoire selon la revendication 1, **caractérisée en ce que** ledit interrupteur mécanique (20) comprend un levier (21) ayant une première partie d'extrémité (21A) reliée audit élément thermosensible (15) et tournée vers ledit montant (16) et une seconde partie d'extrémité (21B) reliée à un moyen élastique (22) et tournée vers ledit réservoir (11), ledit levier (21) étant pivoté sur une broche sensiblement horizontale (23) dans une partie centrale (21C) de celui-ci.

3. Armoire selon la revendication 2, **caractérisée en ce que** lesdits moyens élastiques (22) sont configurés pour permettre la rotation dudit levier (21) autour de ladite broche (23) lors de l'activation dudit élément thermosensible (15).

4. Armoire selon la revendication 1, **caractérisée en ce que** ladite étagère (3) comporte au moins une paire de premiers bords latéraux opposés (14) articulés sur au moins une paire de parois verticales opposées (7, 8; 9, 10) dudit compartiment (2).

5. Armoire selon la revendication 1, **caractérisée en ce qu'**au moins un support (18) est fixé audit montant (16) pour interagir avec ladite au moins une étagère (3), ledit support (18) interagissant avec au moins un deuxième bord latéral (19) de ladite étagère (3).

6. Armoire selon la revendication 1, **caractérisée en ce que** ledit compartiment refermable (2) est délimité par un cadre en forme de boîte (4) comprenant une paroi supérieure (5) et une paroi inférieure (6) sensiblement horizontales, une paire de parois latérales (7, 8) sensiblement verticales, une paroi arrière (9) et au moins un vantail de porte (10) sensiblement vertical.

7. Armoire selon l'une ou plusieurs des revendications précédentes, **caractérisée en ce que** ledit élément thermosensible (15), ledit moyen élastique (22) et ladite goupille (23) sont associés à ladite paroi arrière (9), ladite étagère (3) étant articulée sur lesdites parois latérales (7, 8).

8. Armoire selon la revendication 1, **caractérisée en ce que** ledit élément thermosensible (15) est un fusible mécanique.

9. Armoire selon la revendication 1, **caractérisée en ce que** ledit liquide ignifuge ou extincteur (L) est de l'eau.

10. Armoire selon la revendication 1, **caractérisée en ce que** ladite température seuil prédéterminée (T) est comprise entre 45 °C et 55 °C, de préférence égale à 50 °C.

11. Armoire selon la revendication 1, **caractérisée en ce qu'**elle comprend une pluralité d'étagères (3), la disposition desdits moyens de déverrouillage (13) étant telle que lesdites étagères (3) sont inclinées simultanément.
